# EUROPEAN PATENT APPLICATION

(11) **EP 4 726 837 A1**
(43) Date of publication of application: **15.04.2026**
(21) Application number: 24933184.4
(22) Date of filing: 20.08.2024
(51) Int. Cl.: H01M 10/0567

(54) **ELECTROLYTE ADDITIVE FOR SECONDARY BATTERY, NON-AQUEOUS ELECTROLYTE FOR LITHIUM SECONDARY BATTERY COMPRISING SAME, AND LITHIUM SECONDARY BATTERY COMPRISING SAME**

(30) Priority: 09.08.2024 KR 20240106675
(71) Applicant: Duksan Electera Co., Ltd., Gongju-si, Chungcheongnam-do 32604 (KR)
(72) Inventor: PARK, Jung Woo, Daejeon 34219 (KR); PARK, Dae In, Yongin-si, Gyeonggi-do 17084 (KR); PARK, Jeong Hun, Busan 48243 (KR); KANG, Cheol Ho, Gongju-si, Chungcheongnam-do 32543 (KR); SONG, Je Heon, Gongju-si, Chungcheongnam-do 32589 (KR); LEE, Su Wan, Cheonan-si, Chungcheongnam-do 31156 (KR)
(74) Representative: Vossius & Partner Patentanwälte Rechtsanwälte mbB
(86) International application number: PCT/KR2024/012364
(87) International publication number: WO 2026/034670

(57) **Abstract**

The present invention relates to a novel electrolyte additive, a non-aqueous electrolyte for a lithium secondary battery comprising the novel electrolyte additive, and a lithium secondary battery comprising the non-aqueous electrolyte. More specifically, the present invention relates to a non-aqueous electrolyte for a lithium secondary battery comprising an additive capable of forming coordination bonds on the surface of the cathode. The present invention also relates to a lithium secondary battery having improved performance, wherein by including such a non-aqueous electrolyte, the high-temperature cycle life of the lithium secondary batteries is not degraded, gas generation is suppressed during high-temperature storage, the capacity retention and capacity recovery are improved, and the swelling (thickness expansion) of the battery during high-temperature storage is inhibited.

## Description

### [Technical field]

The present invention relates to electrolyte additives for secondary batteries. More specifically, the present invention pertains to non-aqueous electrolyte additives capable of preventing decomposition of the electrolytes and generation of gas at the interface between a cathode and the electrolyte, and to non-aqueous electrolytes for lithium secondary batteries including the same. The present invention also relates to non-aqueous electrolyte additives capable of forming a robust cathode electrolyte interphase (CEI) layer, and to non-aqueous electrolytes for lithium secondary batteries including the same. In more detail, the present invention relates to non-aqueous electrolytes for lithium secondary batteries comprising fluorinated phosphazene-based phosphorus compound capable of forming a CEI layer on the surface of a cathode. The phosphorus compound coordinates with transition metals of the cathode to enhance the stability of both the metal and the cathode active material, while also suppressing side reactions between the cathode and the electrolytes. The present invention further relates to lithium secondary batteries comprising such non-aqueous electrolytes. By including the non-aqueous electrolytes of the present invention, the lithium secondary batteries exhibit improved high-temperature performance.

### [Background Technology]

Lithium secondary batteries are used not only as portable power sources for mobile phones, notebook computers, etc., but are also expanding their applications to medium and large power sources for electric bicycles, electric vehicles (EV), and the like. With the expansion of such application fields, there is a demand for a lithium secondary battery capable of maintaining excellent performance not only at room temperature but also in harsher external environments such as high or low temperature environments.

Lithium secondary batteries that are currently widely used include, in general, a carbon-based negative electrode capable of intercalating and deintercalating lithium ions, a transition metal oxide-based positive electrode containing lithium, a non-aqueous electrolyte in which lithium salt is dissolved in a mixed carbonate-based organic solvent, and a separator that prevents contact between the positive electrode and the negative electrode. In a lithium secondary battery, during charging, lithium atoms in the positive electrode are ionized into lithium ions and electrons, and the electrons move to the negative electrode through an external circuit and the lithium ions cross the non-aqueous electrolyte and the separator to move to the negative electrode part and are inserted into the carbon negative electrode. During discharging, the electrons move to the positive electrode through the external circuit, and at the same time, the lithium ions are deintercalated from the carbon negative electrode and cross the non-aqueous electrolyte and the separator to move to the positive electrode. The lithium ions and the electrons meet at the positive electrode to form lithium atoms in a stable state. A lithium secondary battery generates electrical energy while repeating such charging and discharging.

With the increasing demand for large-scale devices such as electric vehicles (EVs) and energy storage systems (ESSs), there is a need for longer driving ranges and operating times. Accordingly, active research has been conducted on the development of materials capable of increasing the energy density of lithium-ion secondary batteries. Among such materials, lithium nickel cobalt manganese oxide having a layered structure with a high nickel content, represented by Li(NiₓCo_{y}Mn_{z})O₂, has attracted considerable attention. This material is commonly referred to as NCM. In general, when the nickel content is 60% or more, the material is referred to as high-nickel NCM.

However, high-nickel NCM materials have the drawback of poor cycle characteristics due to their low interfacial stability. Because nickel exhibits high reactivity, electrochemical decomposition of the electrolyte is accelerated at the interface between the cathode and the electrolyte. As a result, by-products generated from the decomposition of the electrolyte accumulate on the surface of the cathode. Such by-products formed on the cathode surface hinder the migration of lithium ions between the cathode and the electrolyte, thereby increasing the interfacial resistance between the cathode and the electrolyte. Consequently, the cycle characteristics of the secondary batteries deteriorate significantly. Furthermore, when the electrolyte undergoes electrochemical decomposition, gases are generated, leading to a swelling phenomenon in which the secondary battery inflates.

One method of preventing decomposition of the electrolyte on the surface of a nickel-rich NCM electrode is to introduce a specific additive into the electrolyte. Through electrochemical reactions, the additive forms a cathode electrolyte interphase (CEI) layer on the surface of the nickel-rich NCM cathode. The CEI layer allows lithium ions to migrate between the electrode and the electrolyte, while blocking the movement of electrons. As a result, the CEI layer can effectively minimize decomposition of the electrolyte.

In addition to using high-nickel NCM to achieve high-capacity secondary batteries, another approach is to increase the operating voltage. However, when high-nickel NCM is employed or high voltage is applied, the layered structure of the cathode collapses, resulting in the generation of reactive oxygen species. The reactive oxygen species react with the solvent of the electrolyte, thereby producing gases. Regardless of their type, the gases thus generated increase the internal pressure of the lithium secondary batteries, act as resistance factors against lithium migration, cause expansion of the battery volume (thickness), present significant challenges in reducing the weight of the battery, and ultimately deteriorate the performance of the battery. Accordingly, the performance of lithium secondary batteries is degraded by factors associated with collapse of the layered structure of the cathode and electrochemical oxidation that leads to decomposition of the electrolyte. In order to suppress such performance degradation, efforts have been made to develop technologies in which an additive capable of coordinating with the metal oxide of the cathode is introduced into the electrolyte so that a stable cathode electrolyte interphase (CEI) layer is formed on the surface of the cathode. The additive provides coordination bonding with the cathode to prevent collapse of the layered structure of the cathode, thereby suppressing the generation of reactive oxygen species at the cathode, enhancing structural stability of the cathode, and inhibiting contact between the electrolyte and the cathode so as to prevent oxidation of the electrolyte.

An additive capable of coordinating with the cathode forms a coordination bond with the metal of the cathode and provides electrons to the metal, thereby strengthening the bonding force between the metal and oxygen, that is, the bonding strength of the metal oxide. Accordingly, an additive capable of coordinating with the cathode can suppress the generation of reactive oxygen species caused by collapse of the layered structure, thereby reducing gas generation. In addition, an additive capable of coordinating with the cathode hinders contact between the solvent and the cathode, thereby reducing electrochemical decomposition of the solvent and suppressing gas generation. As a result, the high-temperature storage characteristics and cycle life characteristics of the secondary batteries can be improved.

### [Detailed description of the invention]

### [Problem to be solved]

Accordingly, in order to improve the high-temperature storage characteristics and cycle life characteristics of lithium secondary batteries, there is a continued demand for the development of additives that can coordinate with the cathode to prevent collapse of the layered structure of the cathode, suppress the generation of reactive oxygen species, inhibit side reactions between the cathode and the electrolyte, and suppress gas generation within the secondary batteries.

In order to solve the above-described problems, the present invention aims to provide a non-aqueous electrolyte for lithium secondary batteries comprising an additive capable of forming coordination bonds with the surface of a cathode.

### [Means to solve the problem]

A non-aqueous electrolyte for lithium secondary batteries according to one embodiment of the present invention comprises:
a compound including fluorinated phosphazene-based phosphorus as an additive;
a lithium salt;
an additional additive; and
a non-aqueous organic solvent.

A non-aqueous electrolyte for lithium secondary batteries according to one embodiment of the present invention comprises:
a compound including fluorinated phosphazene-based phosphorus represented by Chemical Formula 1 as an additive;
a lithium salt;
an additional additive; and
a non-aqueous organic solvent. 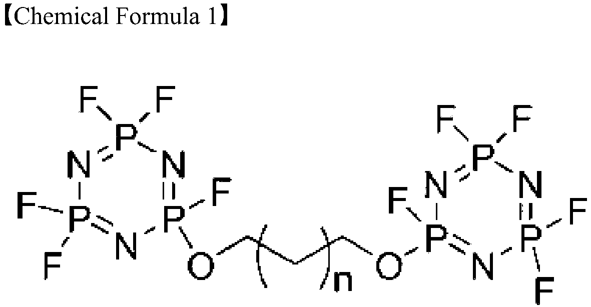
(n is an integer from 0 to 5)

A non-aqueous electrolyte for lithium secondary batteries according to one embodiment of the present invention comprises:
a compound including fluorinated phosphazene-based phosphorus represented by Chemical Formula 2 as an additive;
a lithium salt;
an additional additive; and
a non-aqueous organic solvent.

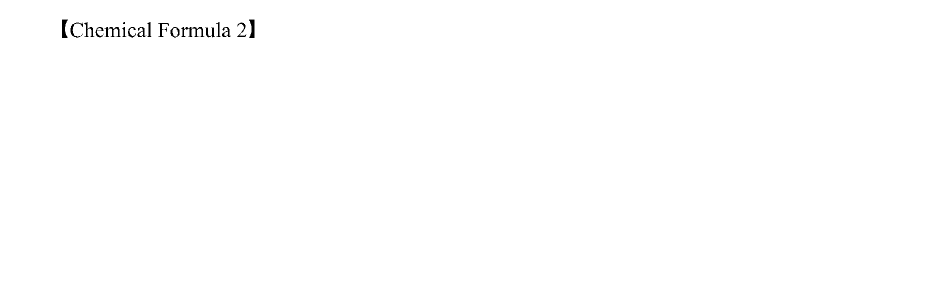

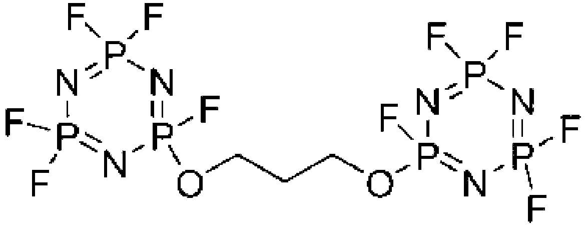

In one embodiment of the present invention, there is provided a lithium secondary battery comprising the non-aqueous electrolyte for lithium secondary batteries of the present invention, a cathode, an anode, and a separator.

The cathode comprises a current collector and a cathode active material layer formed on the current collector. The cathode active material layer may include a binder and a conductive material.

As the cathode active material, a compound into which lithium can be reversibly intercalated and deintercalated may be used. Specifically, lithium cobalt oxide (LCO), which is an oxide of cobalt and lithium, may be used. Lithium manganese oxide (LMO), which is an oxide of manganese and lithium, may also be used. One or more composite oxides of nickel, cobalt, manganese, or combinations of these metals with lithium, namely lithium nickel cobalt manganese oxide (LNCMO), may be used. One or more composite oxides of nickel, cobalt, aluminum, or combinations of these metals with lithium, namely lithium nickel cobalt aluminum oxide (LNCAO), may be used. One or more composite oxides of nickel, cobalt, manganese, aluminum, or combinations of these metals with lithium, namely lithium nickel cobalt manganese aluminum oxide (LNCMAO), may be used. In addition, lithium iron phosphate (LiFePO₄), composed of lithium (Li), iron (Fe), and phosphate (PO₄), may be used.

Specifically, the cathode active material may include a compound represented by any one of the following chemical formulas:
LiₐA_{1-b}R_{b}D₂ (where 0.90 ≤ a ≤ 1.8, 0 ≤ b ≤ 0.5);
LiₐE_{1-b}R_{b}O_{2-c}D_{c} (where 0.90 ≤ a ≤ 1.8, 0 ≤ b ≤ 0.5, 0 ≤ c ≤ 0.05);
LiE_{2-b}R_{d}O_{4-c}D_{c} (where 0 ≤ b ≤ 0.5, 0 ≤ c ≤0.05);
LiₐNi_{1-b-c}Co_{b}R_{c}Dₐ (where 0.90 ≤ a ≤ 1.8, 0 ≤ b ≤ 0.5, 0 ≤ c ≤ 0.05, 0 < a ≤ 2);
LiₐNi_{1-b-c}Co_{b}R_{c}O₂₋ₐZₐ (where 0.90 ≤ a ≤ 1.8, 0 ≤ b ≤ 0.5, 0 ≤ c ≤ 0.05, 0 < a < 2);
LiₐNi_{1-b-c}Co_{b}R_{c}O₂₋ₐZ₂ (where 0.90 ≤ a ≤ 1.8, 0 ≤ b ≤ 0.5, 0 ≤ c ≤ 0.05, 0 < a < 2);
LiₐNi_{1-b-c}Mn_{b}R_{c}Dₐ (where 0.90 ≤ a ≤ 1.8, 0 ≤ b ≤ 0.5, 0 ≤ c ≤ 0.05, 0 < a ≤ 2);
LiₐNi_{1-b-c}Mn_{b}R_{c}O₂₋ₐZₐ (where 0.90 ≤ a ≤ 1.8, 0 ≤ b ≤ 0.5, 0 ≤ c ≤ 0.05, 0 < a < 2);
LiₐNi_{1-b-c}Mn_{b}R_{c}O₂₋ₐZ₂ (where 0.90 ≤ a ≤ 1.8, 0 ≤ b ≤ 0.5, 0 ≤ c ≤ 0.05, 0 < a < 2);
LiₐNi_{b}E_{c}G_{d}O₂ (where 0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO₂ (where 0.90 ≤ a ≤ 1.8, 0 ≤ b ≤ 0.9, 0 ≤ c ≤ 0.5, 0 ≤ d ≤ 0.5, 0.001 ≤ e ≤ 0.1);
LiₐNiG_{b}O₂ (where 0.90 ≤ a ≤ 1.8, 0.001 ≤ b ≤ 0.1);
LiₐCoG_{b}O₂ (where 0.90 ≤ a ≤ 1.8, 0.001 ≤ b ≤ 0.1);
LiₐMnG_{b}O₂ (where 0.90 ≤ a ≤ 1.8, 0.001 ≤ b ≤ 0.1);
LiₐMn₂G_{b}O₄ (where 0.90 ≤ a ≤ 1.8, 0.001 ≤ b ≤ 0.1);
QO₂;
QS₂;
LiQS₂;
V₂O₅;
LiV₂O₅;
LiTO₂;
LiNiVO₄;
Li_{(3-f)}J₂(PO₄)₃ (where 0 ≤ f ≤ 2);
Li_{(3-f)}Fe₂(PO₄)₃ (where 0 ≤ f ≤ 2); and
LiFePO₄.

In the above chemical formulas:
A is Ni, Co, Mn, or a combination thereof;
R is Al, Ni, Co, Mn, Cr, Fe, Mg, Sr, V, a rare earth element, or a combination thereof;
D is O, F, S, P, or a combination thereof;
E is Co, Mn, or a combination thereof;
Z is F, S, P, or a combination thereof;
G is Al, Cr, Mn, Fe, Mg, La, Ce, Sr, V, or a combination thereof;
Q is Ti, Mo, Mn, or a combination thereof;
T is Cr, V, Fe, Sc, Y, or a combination thereof; and
J is V, Cr, Mn, Co, Ni, Cu, or a combination thereof.

As the cathode active material, it is preferable to use an NCM cathode material represented by Li[NiₓCo_{y}Mn_{z}]O, (0.5 ≤ x < 1, 0 ≤ y ≤ 0.5, 0 ≤ z ≤ 0.5, x + y + z = 1), an NCA cathode material represented by Li[NiₓCo_{y}Al_{z}]O₂ (0.5 ≤ x < 1, 0 ≤ y ≤ 0.5, 0 ≤ z ≤ 0.5, x + y + z = 1), or a lithium metal oxide cathode material represented by Li[NiₓCo_{y}M_{z}]O₂ (0.5 ≤ x < 1, 0 ≤ y ≤ 0.5, 0 ≤ z ≤ 0.5, x + y + z = 1, where M is Al, Sr, Mg, Mn, or La).

The cathode active material may also be one having a coating layer on the surface of the compound, or a mixture of the compound and a compound having a coating layer. The coating layer may comprise a compound of a coating element, and may include an oxide of the coating element, a hydroxide of the coating element, an oxyhydroxide of the coating element, an oxycarbonate of the coating element, or a hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. The process for forming the coating layer may employ any coating method that does not adversely affect the physical properties of the cathode active material when such elements are used, for example, spray coating or a dipping method.

The binder serves to firmly adhere the cathode active material particles to each other and also to adhere the cathode active material to the current collector. Representative examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon. The binder of the present invention is not limited thereto.

The conductive material is used to impart conductivity to the electrode. Any electronconductive material that does not cause a chemical change may be used. Examples of the conductive material include natural graphite, artificial graphite, carbon black, acetylene black, Ketjen black, carbon fibers, metal powders such as copper, nickel, aluminum, and silver, and metal fibers. In addition, a conductive material such as a polyphenylene derivative, or a mixture of one or more of such conductive materials, may be used as the conductive material.

Aluminum may be used as the current collector. The current collector of the present invention is not limited thereto.

The anode comprises a current collector and an anode active material layer formed on the current collector. The anode active material layer includes an anode active material. The anode active material layer may include a binder, and may optionally further include a conductive material.

As the anode active material, there may be used a material capable of reversibly intercalating and deintercalating lithium ions, lithium metal, an alloy of lithium metal, a material capable of doping and dedoping lithium, or a transition metal oxide.

As the material capable of reversibly intercalating and deintercalating lithium ions, any carbon-based anode active material commonly used in lithium-ion secondary batteries may be employed. Representative examples include crystalline carbon, amorphous carbon, or combinations thereof. Examples of the crystalline carbon include graphite such as natural graphite or artificial graphite in amorphous, platelet, flake, spherical, or fibrous form. Examples of the amorphous carbon include soft carbon (low-temperature calcined carbon), hard carbon, mesophase pitch-based carbon, and calcined coke.

As the alloy of lithium metal, an alloy of lithium with a metal selected from Na, K, Rb, Cs, Fr, Be, Mg, Ca, Sr, Si, Sb, Pb, In, Zn, Ba, Ra, Ge, Al, or Sn may be used.

As the material capable of doping and dedoping lithium, examples include Si, SiOₓ (0 < x < 2), Si-C composites, Si-Q alloys (where Q is an alkali metal, an alkaline earth metal, a group 13 to group 16 element, a transition metal, a rare earth element, or a combination thereof, excluding Si), Sn, SnO₂, Sn-C composites, and Sn-R alloys (where R is an alkali metal, an alkaline earth metal, a group 13 to group 16 element, a transition metal, a rare earth element, or a combination thereof, excluding Sn). Specific examples of the elements Q and R include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or combinations thereof.

Examples of the transition metal oxide include vanadium oxide, lithium vanadium oxide, and the like.

The binder serves to firmly adhere the anode active material particles to each other and also to adhere the anode active material to the current collector. Representative examples of the binder include polyvinyl alcohol, carboxymethyl cellulose, hydroxypropyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon. The binder of the present invention is not limited thereto.

The conductive material is used to impart conductivity to the electrode. Any electronconductive material that does not cause a chemical change may be employed. Examples of the conductive material include carbon-based materials such as natural graphite, artificial graphite, carbon black, acetylene black, Ketjen black, and carbon fibers; metal-based materials such as metal powders or metal fibers of copper, nickel, aluminum, or silver; conductive polymers such as polyphenylene derivatives; or conductive materials comprising a mixture thereof.

As the current collector, there may be used a copper foil, nickel foil, stainless steel foil, titanium foil, nickel foam, copper foam, a polymer substrate coated with a conductive metal, or a combination thereof.

The anode may include a carbon-based anode active material and a silicon-based anode active material.

The anode may include the carbon-based anode active material and the silicon-based anode active material in a weight ratio of 100:0 to 50:50.

The anode may include the carbon-based anode active material and the silicon-based anode active material in a weight ratio of 97:3 to 50:50.

The anode may include the carbon-based anode active material and the silicon-based anode active material in a weight ratio of 90:10 to 60:40.

### [Effects of the Invention]

Through the fluorinated phosphazene functional group represented by Chemical Formula 1, which is provided as an additive in the non-aqueous electrolyte of the present invention, the high-temperature storage characteristics and cycle life characteristics of a lithium-ion secondary battery can be improved, and stable operation of the lithium-ion secondary battery can be achieved. By protecting the cathode with a small amount of the electrolyte additive, the present invention can improve the safety and reliability of lithium-ion secondary batteries, which are becoming larger in size and higher in capacity.

The additive of the present invention included in the non-aqueous electrolyte of the secondary batteries provides the above-described effects, enabling the realization of a secondary battery with improved performance in which the lifetime is not degraded even when the lithium secondary batteries is exposed to high temperatures, and gas generation during high-temperature storage is suppressed, thereby reducing volume expansion.

### [Best mode for carrying out the invention]

Hereinafter, the present invention will be described in further detail with reference to examples. These examples are merely provided to illustrate the present invention, and the scope of the present invention should not be construed as being limited by these examples.

As used herein, the terms "comprise," "include," "have," and the like are to be understood as open-ended terms that imply the possibility of including other components, unless specifically stated otherwise in the context in which they are used.

As used herein, "%" means weight percent, unless otherwise explicitly indicated.

Hereinafter, the electrolyte additive for lithium secondary batteries, the non-aqueous electrolyte for lithium secondary batteries, and the lithium secondary batteries comprising the non-aqueous electrolyte according to the present invention will be described in detail.

### <Electrolyte Additive for Lithium Secondary Batteries>

The present invention provides a compound including fluorinated phosphazene-based phosphorus as an additive for a non-aqueous electrolyte of a lithium secondary battery, and in particular, a compound including fluorinated phosphazene-based phosphorus represented by Chemical Formula 1. 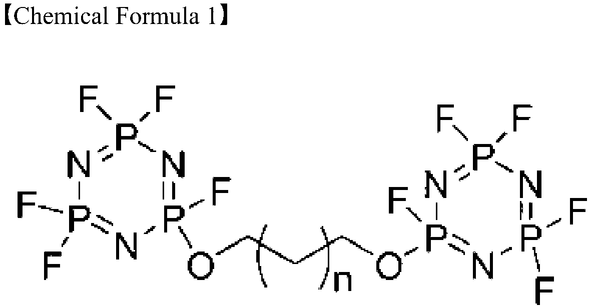 (n is an integer from 0 to 5)

The present invention provides a compound including fluorinated phosphazene-based phosphorus as an additive for a non-aqueous electrolyte of a lithium secondary battery, and in particular, a compound including fluorinated phosphazene-based phosphorus represented by Chemical Formula 2.

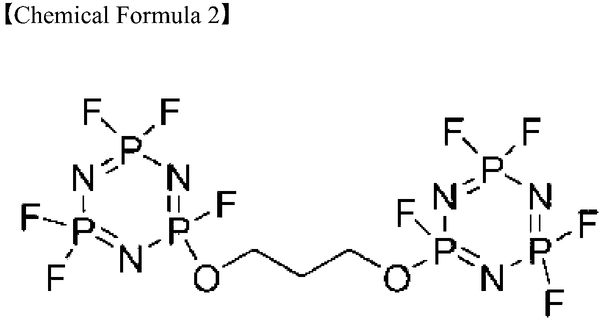

### <Electrolyte for Lithium Secondary Batteries>

The present invention provides an electrolyte for lithium secondary batteries comprising:
a compound including fluorinated phosphazene-based phosphorus;
an additional additive;
a lithium salt; and
a non-aqueous organic solvent.

The present invention also provides an electrolyte for lithium secondary batteries comprising:
a compound including fluorinated phosphazene-based phosphorus represented by Chemical Formula 1;
an additional additive;
a lithium salt; and
a non-aqueous organic solvent.

The present invention also provides an electrolyte for lithium secondary batteries comprising:
a compound including fluorinated phosphazene-based phosphorus represented by Chemical Formula 2;
an additional additive;
a lithium salt; and
a non-aqueous organic solvent.

The compound including fluorinated phosphazene-based phosphorus may be included in an amount of 0.05 to 20% by weight, based on the total weight of the electrolyte for the lithium secondary batteries.

The compound including fluorinated phosphazene-based phosphorus may preferably be included in an amount of 0.05 to 10% by weight, based on the total weight of the electrolyte for the lithium secondary batteries.

The compound including fluorinated phosphazene-based phosphorus may more preferably be included in an amount of 0.05 to 5% by weight, 0.05 to 3% by weight, or 0.05 to 2% by weight, based on the total weight of the electrolyte for the lithium secondary batteries.

The compound including fluorinated phosphazene-based phosphorus may be included in an amount of 0.1 to 20% by weight, based on the total weight of the electrolyte for the lithium secondary batteries.

The compound including fluorinated phosphazene-based phosphorus may preferably be included in an amount of 0.1 to 10% by weight, based on the total weight of the electrolyte for the lithium secondary batteries.

The compound including fluorinated phosphazene-based phosphorus may more preferably be included in an amount of 0.1 to 5% by weight, 0.1 to 3% by weight, or 0.1 to 2% by weight, based on the total weight of the electrolyte for the lithium secondary batteries.

When the compound including fluorinated phosphazene-based phosphorus is included in an amount of less than 0.05% by weight based on the total weight of the electrolyte for the lithium secondary batteries, the high-temperature storage characteristics and cycle life characteristics of the lithium secondary batteries are insufficient. Conversely, when the compound including fluorinated phosphazene-based phosphorus is included in an amount exceeding 20% by weight based on the total weight of the electrolyte for the lithium secondary batteries, problems arise in that the high-temperature storage characteristics and cycle life characteristics deteriorate due to increased internal resistance and reduced capacity of the secondary batteries.

The electrolyte for the lithium secondary batteries may further include at least one additional additive selected from the group consisting of halogen-substituted or unsubstituted carbonate-based compounds, nitrile-based compounds, borate-based compounds, lithium salt-based compounds, phosphate-based compounds, sulfite-based compounds, sulfone-based compounds, sulfate-based compounds, and sultone-based compounds.

Representative examples of the additional additive include lithium difluorophosphate, lithium tetrafluoro(oxalate)phosphate, lithium bis(fluorosulfonyl)imide, 1,3-propane sultone, 1,3-propene sultone, fluoroethylene carbonate, vinylene carbonate, and vinyl ethylene carbonate.

The additional additive may be included in an amount of 0.05 to 20% by weight, based on the total weight of the electrolyte for the lithium secondary batteries.

The additional additive may preferably be included in an amount of 0.05 to 10% by weight, based on the total weight of the electrolyte for the lithium secondary batteries.

The additional additive may more preferably be included in an amount of 0.05 to 5% by weight, and specifically 0.05 to 3% by weight, based on the total weight of the electrolyte for the lithium secondary batteries.

When the additional additive is included in an amount of less than 0.05% by weight based on the total weight of the electrolyte for the lithium secondary batteries, the film-forming effect on the electrode is insignificant, which may reduce the effect of suppressing side reactions between the electrode and the electrolyte. On the other hand, when the additional additive is included in an amount exceeding 20% by weight based on the total weight of the electrolyte for the lithium secondary batteries, an excessively thick film may be formed on the electrode surface, thereby increasing interfacial resistance and causing problems such as capacity reduction.

The lithium salt may comprise at least one selected from the group consisting of LiPF₆, LiClO₄, LiAsF₆, LiBF₄, LiBF₆, LiSbF₆, LiAlO₄, LiAlCl₄, LiClO₄, LiCF₃SO₃, LiC₄F₉SO₃, LiN(C₂F₅SO₃)₂, LiN(C₂F₅SO₂)₂, LiN(CF₃SO₂)₂, and LiB(C₂O₄)₂.

It is preferable to use a lithium salt having a high degree of lattice energy dissociation, excellent ionic conductivity, and superior thermal stability and oxidation resistance. The lithium salt serves as a pathway for lithium ion migration within the secondary batteries, thereby enabling the fundamental operation of the lithium secondary batteries.

The concentration of the lithium salt may be from 0.1 to 2.5 M (mol/L) based on the total amount of the electrolyte for the lithium secondary batteries.

In consideration of properties related to electrical conductivity and viscosity associated with lithium-ion mobility, the concentration of the lithium salt is preferably from 0.3 to 2.5 M (mol/L) based on the total amount of the electrolyte for the lithium secondary batteries.

In consideration of properties related to electrical conductivity and viscosity associated with lithium-ion mobility, the concentration of the lithium salt may more preferably be from 0.7 to 1.6 M (mol/L).

When the concentration of the lithium salt is less than 0.1 M, the electrical conductivity of the electrolyte for the lithium secondary batteries decreases, thereby reducing the performance of the non-aqueous electrolyte to rapidly transfer ions between the cathode and the anode of the lithium secondary batteries. On the other hand, when the concentration of the lithium salt exceeds 2.5 M, the viscosity of the electrolyte for the lithium secondary batteries increases, resulting in reduced mobility of lithium ions and causing deterioration of battery performance at low temperatures.

The non-aqueous organic solvent may be a linear carbonate-based solvent, a cyclic carbonate-based solvent, an ester-based solvent, or a mixed solvent thereof.

The linear carbonate-based solvent may include at least one selected from the group consisting of dimethyl carbonate (DMC), diethyl carbonate (DEC), dipropyl carbonate (DPC), ethyl propyl carbonate (EPC), ethyl methyl carbonate (EMC), and methyl propyl carbonate (MPC).

In addition, the cyclic carbonate-based solvent may include at least one selected from the group consisting of ethylene carbonate (EC), propylene carbonate (PC), 1,2-butylene carbonate (BC), vinylene carbonate (VC), and fluoroethylene carbonate (FEC).

The ester-based solvent may include at least one selected from the group consisting of methyl acetate (MA), ethyl acetate (EA), propyl acetate (PA), methyl propionate (MP), ethyl propionate (EP), propyl propionate (PP), and butyl propionate (BP).

It may be preferable to use a mixture of a cyclic carbonate-based organic solvent having high dielectric constant and high ionic conductivity, which can enhance the charge/discharge performance of the secondary batteries, and a linear carbonate-based organic solvent having low viscosity, which can appropriately adjust the viscosity of the high dielectric carbonate-based organic solvent.

Specifically, a mixture may be used comprising a high dielectric constant carbonate-based organic solvent selected from the group consisting of ethylene carbonate (EC), propylene carbonate (PC), and mixtures thereof, and a low-viscosity carbonate-based organic solvent selected from the group consisting of dimethyl carbonate (DMC), diethyl carbonate (DEC), ethyl methyl carbonate (EMC), and mixtures thereof.

The cyclic carbonate solvent has high polarity and can sufficiently dissociate lithium ions; however, it has the disadvantage of high viscosity and low ionic conductivity. Accordingly, by mixing the cyclic carbonate solvent with a linear carbonate solvent having lower polarity but lower viscosity, the characteristics of the lithium secondary batteries can be optimized.

Accordingly, it may be preferable to use, as the non-aqueous organic solvent, a mixture of at least one solvent selected from the cyclic carbonate solvents and at least one solvent selected from the linear carbonate solvents.

The mixed solvent of the linear carbonate-based solvent and the cyclic carbonate-based solvent may be used by mixing the linear carbonate-based solvent and the cyclic carbonate-based solvent in a volume ratio of 9:1 to 1:9.

From the perspective of cycle life characteristics and storage characteristics of the secondary batteries, the mixed solvent of the linear carbonate-based solvent and the cyclic carbonate-based solvent may more preferably be used by mixing the linear carbonate-based solvent and the cyclic carbonate-based solvent in a volume ratio of 2:8 to 8:2.

The non-aqueous organic solvent may comprise ethylene carbonate (EC), propylene carbonate (PC), ethyl methyl carbonate (EMC), and diethyl carbonate (DEC).

The non-aqueous organic solvent may comprise 5 to 40% by weight of ethylene carbonate (EC), 5 to 20% by weight of propylene carbonate (PC), 10 to 70% by weight of ethyl methyl carbonate (EMC), and 10 to 60% by weight of diethyl carbonate (DEC).

Specifically, among the cyclic carbonate-based solvents, ethylene carbonate (EC) or propylene carbonate (PC), which have high dielectric constants, may be used. When artificial graphite is used as the anode active material, it is preferable to use ethylene carbonate (EC). Among the linear carbonate-based solvents, it is preferable to use dimethyl carbonate (DMC), ethyl methyl carbonate (EMC), or diethyl carbonate (DEC), which have low viscosity.

The non-aqueous organic solvent may be included in an amount of 5% to 80% by weight based on the total amount of the electrolyte for the lithium secondary batteries. The non-aqueous organic solvent may also be included in an amount of 5% to 70% by weight based on the total amount of the electrolyte for the lithium secondary batteries.

### <Lithium Secondary Batteries>

The lithium secondary batteries comprising the non-aqueous electrolyte exhibits excellent performance in that its cycle life characteristics do not deteriorate at high temperatures, its resistance does not increase during storage at high temperatures, and expansion of the battery volume (thickness) is suppressed.

Hereinafter, the lithium secondary batteries of the present invention will be described in detail.

The lithium secondary batteries of the present invention comprises:
a cathode;
an anode;
a separator; and
a non-aqueous electrolyte.

The cathode may include at least one cathode active material selected from the group consisting of lithium metal oxides such as LiCoO₂, LiFePO₄, LiMnO₂, LiMn₂O₄, LiNiO₂, Li[NiₓCo_{y}Mn_{z}]O₂ (0.5 ≤ x < 1, 0 ≤ y ≤ 0.5, 0 ≤ z ≤ 0.5, x + y + z = 1), and Li[NiₓCo_{y}M_{z}]O₂ (0.5 ≤ x < 1, 0 ≤ y ≤ 0.5, 0 ≤ z ≤ 0.5, x + y + z = 1, where M is Al, Sr, Mg, Mn, or La). The cathode may include high-nickel NMC.

The anode may include at least one anode active material selected from the group consisting of silicon, silicon compounds, tin, tin compounds, lithium titanium oxide, crystalline carbon, amorphous carbon, artificial graphite, natural graphite, and mixtures of artificial graphite and natural graphite.

The separator may be composed of a porous polymer film made of at least one polyolefin-based polymer selected from ethylene polymers, propylene polymers, ethylene/butene copolymers, and ethylene/hexene copolymers, or may be composed of a laminate thereof. The separator may further include a coating film coated with a ceramic material or a polymer material.

The non-aqueous electrolyte may include:
a compound including fluorinated phosphazene-based phosphorus, particularly a compound represented by Chemical Formula 1;
an additional additive;
a lithium salt; and
a non-aqueous organic solvent. 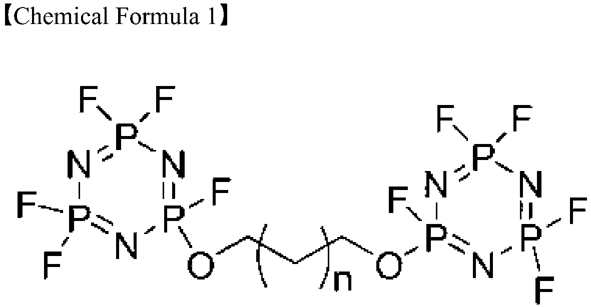
(n is an integer from 0 to 5)

The non-aqueous electrolyte may include:
a compound including fluorinated phosphazene-based phosphorus, particularly a compound represented by Chemical Formula 2;
an additional additive;
a lithium salt; and
a non-aqueous organic solvent.

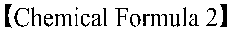

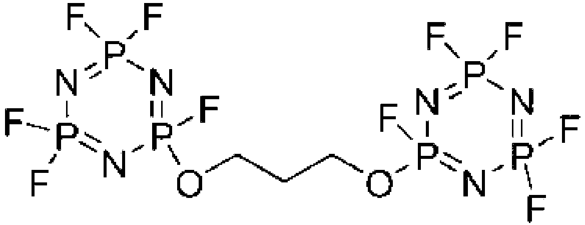

Examples of the lithium secondary batteries include lithium metal secondary batteries, lithium-ion secondary batteries, lithium polymer secondary batteries, and lithium-ion polymer secondary batteries. The lithium secondary batteries of the present invention are not limited thereto.

In more detail, the cathode active material is preferably a composite metal oxide of lithium with at least one material selected from cobalt, manganese, and nickel, or a composite metal oxide of lithium with at least one material selected from cobalt, aluminum, and nickel. The solid solubility among cobalt, manganese, and nickel metals, or among cobalt, aluminum, and nickel metals, may vary. In addition to cobalt, manganese, and nickel metals, an element selected from the group consisting of Mg, Al, K, Na, Ca, Si, Ti, Sn, V, Ge, Ga, B, As, Zr, Cr, Fe, Sr, V, and rare earth elements may be further included. In addition to cobalt, aluminum, and nickel metals, an element selected from the group consisting of Mg, Mn, K, Na, Ca, Si, Ti, Sn, V, Ge, Ga, B, As, Zr, Cr, Fe, Sr, V, and rare earth elements may be further included.

Specifically, the cathode active material may be a lithium intercalation compound such as a lithium metal oxide or a lithium chalcogenide compound, for example, LiCoO₂, LiFePO₄, LiMnO₂, LiMn₂O₄, LiNiO₂, Li[NiₓCo_{y}Mn_{z}]O₂ (0.5 ≤ x < 1, 0 ≤ y ≤ 0.5, 0 ≤ z ≤ 0.5, x + y + z = 1), or Li[NiₓCo_{y}M_{z}]O₂ (0.5 ≤ x < 1, 0 ≤ y ≤ 0.5, 0 ≤ z ≤ 0.5, x + y + z = 1, where M is Al, Sr, Mg, Mn, or La). The cathode active material of the present invention is not limited thereto, and any material usable as a cathode active material in a secondary battery may be employed. The cathode active material may be a high-nickel NMC.

The cathode may comprise a current collector and a cathode active material layer formed on the current collector. The cathode active material layer may include a cathode active material capable of intercalating and deintercalating lithium, a binder, and a conductive material.

The anode may comprise a current collector and an anode active material layer formed on the current collector. The anode active material layer may include an anode active material capable of intercalating and deintercalating lithium, a binder, and a conductive material. Examples of the anode active material include crystalline carbon, amorphous carbon, carbon composites, carbon fibers, lithium metal, lithium alloys, or carbon-silicon composites. The anode active material of the present invention is not limited thereto, and any material usable as an anode active material in a secondary battery may be employed.

The cathode and/or anode may be manufactured by dispersing an electrode active material, a binder, and a conductive material, and optionally a thickener, in a solvent to prepare an electrode slurry composition, and then applying the slurry composition onto an electrode current collector. Aluminum or an aluminum alloy is commonly used as the cathode current collector, while copper or a copper alloy is commonly used as the anode current collector.

The cathode current collector and the anode current collector may be in the form of a foil or a mesh.

The binder is a material that serves functions such as forming a paste of the active material, adhering the active material particles to each other, adhering the active material to the current collector, and providing a buffering effect against expansion and contraction of the active material. Any binder that may be used by those skilled in the art can be employed. Examples include polyvinyl alcohol, carboxymethyl cellulose, hydroxypropyl cellulose, diacetyl cellulose, polyvinyl chloride, carboxylated polyvinyl chloride, polyvinyl fluoride, polyethylene oxide, polyvinylpyrrolidone, polyurethane, polytetrafluoroethylene, polyvinylidene fluoride (PVdF), a copolymer of polyhexafluoropropylene and polyvinylidene fluoride (PVdF/HFP), poly(vinyl acetate), alkylated polyethylene oxide, polyvinyl ether, poly(methyl methacrylate), poly(ethyl acrylate), polyacrylonitrile, polyvinylpyridine, polyethylene, polypropylene, styrene-butadiene rubber, acrylated styrene-butadiene rubber, acrylonitrile-butadiene rubber, epoxy resin, and nylon. The binder of the present invention is not limited thereto.

The conductive material is used to impart conductivity to the electrode, and any electrically conductive material that does not cause a chemical change in the constructed secondary battery may be used. The conductive material may include at least one selected from the group consisting of graphite-based conductive materials, carbon black-based conductive materials, and metal or metal compound-based conductive materials. Examples of the graphite-based conductive material include artificial graphite and natural graphite. Examples of the carbon black-based conductive material include acetylene black, Ketjen black, Denka black, thermal black, and channel black. Examples of the metal or metal compound-based conductive material include tin, tin oxide, tin phosphate (SnPO₄), titanium oxide, potassium titanate, and perovskite materials such as LaSrCoO₃ and LaSrMnO₃. However, the present invention is not limited to the conductive materials enumerated above.

The thickener is not particularly limited so long as it can serve to adjust the viscosity of the active material slurry. Examples include carboxymethyl cellulose, hydroxymethyl cellulose, hydroxyethyl cellulose, and hydroxypropyl cellulose.

As the solvent in which the electrode active material, binder, and conductive material are dispersed, either a non-aqueous solvent or an aqueous solvent may be used. Examples of the non-aqueous solvent include N-methyl-2-pyrrolidone (NMP), dimethylformamide, dimethylacetamide, N,N-dimethylaminopropylamine, ethylene oxide, and tetrahydrofuran. An example of the aqueous solvent includes water.

The lithium secondary batteries may include a separator that prevents short-circuiting between the cathode and the anode and provides a pathway for lithium ion migration. The separator may be a polyolefin-based polymer film such as polypropylene, polyethylene, polyethylene/polypropylene, polyethylene/polypropylene/polyethylene, or polypropylene/polyethylene/polypropylene, or a multilayer thereof, a microporous film, a woven fabric, or a nonwoven fabric. In addition, as the separator, a porous polyolefin film coated with a resin having excellent stability may also be used.

In addition, the lithium secondary batteries may be manufactured in various shapes such as prismatic, cylindrical, pouch-type, or coin-type.

### [Examples]

Hereinafter, the present invention will be described in further detail with reference to examples. However, the scope of the present invention should not be construed as being limited by these examples.

### <Method for Preparing the Compound of Chemical Formula 1>

### <Synthesis Example of 1,3-bis((2,4,4,6,6-pentafluoro-1,3,5,2λ⁵,4λ⁵,6λ⁵-triazatriphosphinin-2-yl)oxy)propane>

A 500 mL three-necked flask equipped with an N₂ purge line and a dropping funnel was charged with 0.14 mol of hexachlorocyclotriphosphazene and 200 mL of acetonitrile at room temperature, followed by the addition of 1.43 mol of sodium fluoride. The reactor was purged with nitrogen, and 10 wt% of 1-ethyl-3-methylimidazolium tetrafluoroborate was slowly added. The reaction temperature was adjusted to 40 °C, and the mixture was stirred for 14 hours. Thereafter, the reaction mixture was filtered to remove a white solid, and the filtrate was transferred into a 500 mL flask. Subsequently, 0.07 mol of 1,3-propanediol and 0.07 mol of tripotassium phosphate were rapidly added, the reactor was again purged with nitrogen, and the mixture was stirred at room temperature for 16 hours. After completion of the reaction, the mixture was filtered to remove a white solid, the solvent was concentrated, and purification was carried out by column chromatography under a heptane:dichloromethane (8:1) condition. The product was then dried in a vacuum oven to obtain the desired compound, 1,3-bis((2,4,4,6,6-pentafluoro-1,3,5,2λ⁵,4λ⁵,6λ⁵-triazatriphosphinin-2-yl)oxy)propane.

¹H NMR CDCl₃ δ = 2.18 (m, 2H), 4.35 (m, 4H)

### <Preparation of Electrolyte for Lithium Secondary Batteries Containing 1,3-bis((2,4,4,6,6-pentafluoro-1,3,5,2λ⁵,4λ⁵,6λ⁵-triazatriphosphinin-2-yl)oxy)propane>

A mixed solvent of ethylene carbonate (EC) and ethyl methyl carbonate (EMC) (EC/EMC = 25/75 by volume) was prepared, and LiPF₆ was dissolved therein to a concentration of 1.0 M. To the resulting mixed solution were added 0.5 wt% of 1,3-propene sultone (PRS), 1.0 wt% of fluoroethylene carbonate (FEC), 0.5 wt% of propane sultone (PS), 0.5 wt% of ethylene sulfate (Esa), and 0.5 wt% of 1,3-bis((2,4,4,6,6-pentafluoro-1,3,5,2λ⁵,4λ⁵,6λ⁵-triazatriphosphinin-2-yl)oxy)propane synthesized in the above Synthesis Example, represented by Chemical Formula 1, thereby preparing an electrolyte for lithium secondary batteries containing the compound of Chemical Formula 1.

### <Preparation of a Lithium Secondary Batteries Comprising an Electrolyte for Lithium Secondary Batteries Containing 1,3-bis((2,4,4,6,6-pentafluoro-1,3,5,2λ⁵,4λ⁵,6λ⁵triazatriphosphinin-2-yl)oxy)propane (Compound of Chemical Formula 2)>

A cathode active material slurry was prepared by adding 96 wt% of an NCM cathode active material comprising Li[NiₓCo_{y}Mn_{z}]O₂ (0.5 ≤ x < 1, 0 ≤ y ≤ 0.5, 0 ≤ z ≤ 0.5, x + y + z = 1), 2 wt% of a conductive material (Super-P), and 2 wt% of a binder (PVdF) to an organic solvent, N-methyl-2-pyrrolidone (NMP). The cathode active material slurry was coated onto an aluminum foil current collector, dried to form a cathode, and then roll-pressed to produce the final cathode. In addition, an anode active material slurry was prepared by mixing 96 wt% of a graphite-based anode active material containing silicon oxide (SiOₓ (0 < x < 2)), 1 wt% of a conductive material (Super-P), 1.5 wt% of a binder (SBR), and 1.5 wt% of CMC. The anode active material slurry was coated onto a copper foil current collector and dried to produce an anode.

The cathode and anode prepared as described above were provided, and a separator was interposed therebetween. Then, the electrolyte for lithium secondary batteries containing the compound of Chemical Formula 1 was injected between the two electrodes with the separator interposed therebetween, thereby manufacturing a lithium secondary battery in an aluminum pouch (Al-pouch type) form comprising the electrolyte containing the compound of Chemical Formula 1.

### [Comparative Example 1]

### <Comparative Example 1: Preparation of a Lithium Secondary Battery Not Containing the Compound of Formula 1>

Except that the lithium secondary battery electrolyte did not contain the compound of Formula 1, 1,3-bis((2,4,4,6,6-pentafluoro-1,3,5,2λ⁵,4λ⁵,6λ⁵-triazatriphosphinin-2-yl)oxy)propane, a lithium secondary battery containing an electrolyte not including the compound of Formula 1 was prepared in the same manner as in the preparation of the lithium secondary batteries of the Example.

### [Comparative Example 2]

### <Preparation of a Lithium Secondary Battery Comprising an Electrolyte Containing Lithium Difluorophosphate (LiPO₂F₂) Additive>

Except that the electrolyte used was a lithium secondary battery electrolyte containing lithium difluorophosphate (LiPO₂F₂) and not the compound represented by Chemical Formula 1, 1,3-bis((2,4,4,6,6-pentafluoro-1,3,5,2λ⁵,4λ⁵,6λ⁵-triazatriphosphinin-2-yl)oxy)propane, a lithium secondary battery was prepared in the same manner as in the Example, thereby producing a lithium secondary battery comprising the LiPO₂F₂-containing electrolyte instead of the compound of Chemical Formula 1.

The compositions of the lithium secondary battery electrolytes of the Example and Comparative Examples are shown in Table 1 below.

### <Composition of Electrolytes for Lithium Secondary Battery>

**[Table 1]**

| | Compound of Formula 1 | 1,3-Propane Sultone (PRS) | Fluoroethylene Carbonate (FEC) | Lithium Difluorophosphate (LiPO₂F₂) | 1,3-Propane sultone (PS) | Ethylene Sulfate (Esa) |
|---|---|---|---|---|---|---|
| Example | O | O | O | | O | O0 |
| Comparative Example 1 | | O | O | | O | O |
| Comparative Example 2 | | O | O | O | O | O |

### [Experimental Example]

### <Experimental Example 1>

### Measurement of High-Temperature Lifespan Capacity Retention (45°C)

The pouch-type lithium secondary batteries, manufactured using the electrolytes of the above Example and Comparative Examples, were charged at 1C rate to 4.2 V at high temperature (45 °C), followed by a 10-minute rest, then discharged at 1C rate to 2.7 V, and again rested for 10 minutes. This cycle was repeated 500 times, and the discharge capacity (mAh) and lifespan capacity retention rate (%) of the batteries were measured. The measured discharge capacities and lifespan capacity retention rate of the batteries were compared, and the results are shown in Table 2.

**[Table 2]**

| | 1 cycle discharge capacity (mAh) | 400 cycle discharge capacity (mAh) | lifespan capacity retention rate (%) |
|---|---|---|---|
| Example | 1,131.2 | 978.5 | 86.5 |
| comparative example 1 | 1,139.5 | 910.5 | 79.9 |
| comparative example 2 | 1,129.7 | 929.7 | 82.3 |

As shown in Table 2, the results of the high-temperature lifespan evaluation indicate that the lithium secondary battery of the above example exhibited a higher capacity retention at high temperatures compared to the lithium secondary batteries of the comparative examples.

Therefore, it could be confirmed that the lithium secondary battery of the above example, by including an electrolyte containing the compound represented by Chemical Formula 1, exhibited a higher lifespan capacity retention at high temperatures without any degradation in high-temperature lifespan performance compared to the lithium secondary batteries of the comparative examples. In other words, the additive of the compound represented by Chemical Formula 1 improved the lifespan capacity retention at high temperatures without causing performance deterioration due to side reactions with other additives.

### <Experimental Example 2>

### Measurement of High-Temperature Storage Characteristics (60°C)

Pouch-type lithium secondary batteries manufactured using the electrolytes of the above examples and comparative examples were stored at high temperature (60°C) for 6 weeks, and then the volume change rate, capacity retention rate, and capacity recovery rate of the batteries were measured. Table 3 below shows the results of the volume change rate, capacity retention rate, and capacity recovery rate of the batteries after 6 weeks of storage at 60°C compared to week 0.

**[Table 3]**

| | volume expansion rate after 6 weeks of storage at 60°C (%) | capacity retention rate after 6 weeks of storage at 60°C (%) | capacity recovery rate after 6 weeks of storage at 60°C (%) |
|---|---|---|---|
| example | 2.75 | 81.09 | 83.19 |
| comparative example 1 | 7.86 | 77.58 | 80.78 |
| comparative example 2 | 8.13 | 76.30 | 78.90 |

As shown in Table 3, the pouch-type secondary battery of the example exhibited a lower volume expansion rate compared to that of the comparative example. This indicates that the additive of the present invention has an effect of suppressing gas generation.

In addition, as shown in Table 3, the secondary battery of the example exhibited higher capacity retention rate and capacity recovery rate compared to the secondary batteries of the comparative examples. From these, it can be seen that the additive of the present invention is an additive that provides excellent capacity retention and capacity recovery after 6 weeks.

From the above experimental results, it can be seen that the additive of the present invention exhibits excellent high-temperature (45°C) lifespan characteristics, suppresses gas generation, and provides superior capacity retention and capacity recovery.

## Claims

1. A non-aqueous electrolyte for a lithium secondary battery, comprising:
an additive,
an additional additive,
a lithium salt, and
a non-aqueous organic solvent,
wherein the additive is a fluorinated phosphazene-based phosphorus compound.

2. The non-aqueous electrolyte for a lithium secondary battery according to claim 1, wherein the additive is a compound represented by chemical formula 1. 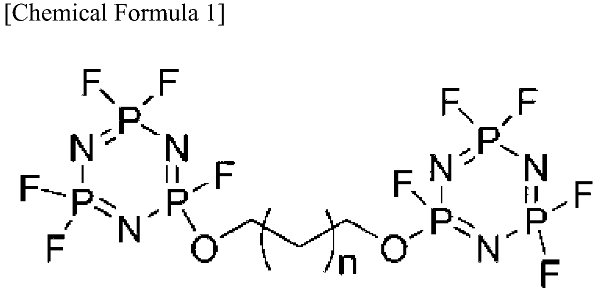 (wherein n is an integer from 0 to 5.)

3. The non-aqueous electrolyte for a lithium secondary battery according to claim 1 or 2, wherein the additive is included in an amount of 0.05 to 20 wt% based on the total weight of the non-aqueous electrolyte for the lithium secondary battery.

4. The non-aqueous electrolyte for a lithium secondary battery according to claim 1 or 2, wherein the additional additive is at least one compound selected from the group consisting of a halogen-substituted or unsubstituted carbonate-based compound, a nitrile-based compound, a borate-based compound, a lithium salt-based compound, a phosphate-based compound, a sulfite-based compound, a sulfone-based compound, a sulfate-based compound, and a sultone-based compound.

5. A lithium secondary battery comprising:
the non-aqueous electrolyte for a lithium secondary battery according to claim 1 or 2,
a cathode,
an anode, and
a separator.

6. The lithium secondary battery of claim 5, wherein the cathode comprises a cathode active material selected from the group consisting of lithium cobalt oxide (LCO), lithium manganese oxide (LMO), lithium nickel cobalt manganese oxide (LNCMO) in which nickel (Ni) and manganese (Mn) are combined with lithium cobalt oxide (LCO), lithium nickel cobalt aluminum oxide (LNCAO) in which nickel (Ni) and aluminum (Al) are combined with lithium cobalt oxide (LCO), lithium nickel cobalt manganese aluminum oxide (LNCMAO) in which nickel (Ni), manganese (Mn), and aluminum (Al) are combined with lithium cobalt oxide (LCO), lithium iron phosphate (LiFePO₄) comprising lithium (Li), iron (Fe), and phosphate (PO₄), and lithium metal oxide represented by Li[NiₓCo_{y}M_{z}]O₂ (0.5 ≤ x < 1, 0 ≤ y ≤ 0.5, 0 ≤ z ≤ 0.5, x + y + z = 1, M is Al, Sr, Mg, Mn, or La).

7. The lithium secondary battery of claim 6, wherein the lithium nickel cobalt manganese oxide (LNCMO) is lithium nickel cobalt manganese oxide (LNCMO) represented by Li[NiₓCo_{y}Mn_{z}]O₂ (0.5 ≤ x < 1, 0 ≤ y ≤ 0.5, 0 ≤ z ≤ 0.5, x + y + z = 1).

8. The lithium secondary battery of claim 5, wherein the anode comprises a carbon-based active material and a silicon-based active material.

9. The lithium secondary battery of claim 8, wherein the carbon-based anode active material and the silicon-based anode active material are included at a weight ratio of 100:0 to 50:50.

10. The lithium secondary battery of claim 9, wherein the carbon-based anode active material and the silicon-based anode active material are included at a weight ratio of 97:3 to 50:50.

11. The lithium secondary battery of claim 9, wherein the carbon-based anode active material and the silicon-based anode active material are included at a weight ratio of 90:10 to 60:40.
